(19) Europäisches Patentamt
European Patent Office
Office européen des brevets

(11) EP 1 763 154 A1

(12) EUROPEAN PATENT APPLICATION

(43) Date of publication:
14.03.2007  Bulletin 2007/11

(51) Int Cl.:
$H04B\ 7/185^{(2006.01)}$

(21) Application number: 05255631.3

(22) Date of filing: 09.09.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: BAE Systems plc
London SW1Y 5AD (GB)

(72) Inventors:
• Watson, Robert John
University of Bath, Dept. EE
Bath BA2 7AY (GB)
• Hodges, Duncan David
University of Bath, Dept. EE
Bath BA2 7AY (GB)

(54) Generation of propagation attenuation time series

(57)  As congestion increases in the X and Ku frequency bands an increasing number of communication systems are being designed using Ka and V frequency bands. However, at these higher frequencies the propagation impairments caused by meteorological phenomena (such as cloud, rain etc) become significant. The high levels of attenuation mean that a static fade margin is not practical and dynamic fade mitigation techniques must be used.

Described herein is a method for the generation of radiowave propagation time series using estimates of the meteorological environment from Numerical Weather Prediction (NWP) systems. The resulting time series are shown to exhibit the correct first and second order characteristics, as well as the correct spatial correlation. The long term statistics are shown to compare well to the long term cumulative distribution functions produced using ITU-R recommendation P618-8.

Fig. 2.  Simplified box diagram of the time series generator.

**Description**

The present invention relates to improvements in or relating to communications networks and is more particularly concerned with improving the performance of such networks that operate at higher frequency bands.

As congestion increases in the X and Ku frequency bands, many communication systems are being designed to use Ka and V frequency bands. These frequency bands offer several advantages over lower frequency links for both satellite and terrestrial communications systems. For example, since the wavelength is shorter, it is possible to reduce the physical size of antennas whilst maintaining the same antenna gain. This is a big advantage In both the commercial and military markets, particularly for portable terminals.

However, there are disadvantages when using frequencies in excess of 20 GHz especially as the tropospheric radiowave propagation environment becomes very challenging. The attenuation caused by gaseous absorption, clouds and rain all become significant and the magnitude of scintillation caused in the troposphere also increases as described by R Polonio and C Riva, in "ITALSAT propagation experience at 18.7, 39.6 and 49.5 Hz at Spino D'Adda three years of CPA statistics", IEEE Trans Antennas Propagat, vol 46, no 5, pages 631 to 635, May 1998. Using the 1995 ITALSAT beacon measurements at Spina D'Adda, Milan, Italy, it is apparent that, at 49.5 GHz static fade margins of 25/dB and 40/dB were required to achieve 99.9% and 99.97% availability.

In order to provide highly available systems, it is typically necessary to employ some sort of fade mitigation technique (FMT) or informed resource management system.

FMTs are described in "Comparative Analysis and performance of two predictive fade detection schemes for Ka band fade countermeasures", by G Gremont, M Filip, P Gallois and S Bate, IEEE J Select Areas Commun, vol 17, no 2, pages 180 to 192, February 1999; and in "Fade countermeasures applied to transmissions at 20/30 GHz", M J Willis, Electronics and Communication Engineering Journal, pages 88 to 96, April 1991.

A resource management system is described in "The use of short term attenuation precasts for resource management", by R J Watson and D Hodges in Roc. 10th Ka and broadband Communications Conference, Vicenza, Italy, October 2004. In their paper, Watson and Hodges discuss the use of a propagation forecast scheme that uses meteorological model data and weather radar data to calculate attenuation due to gaseous absorption, clouds and rain for a network model.

In essence, these schemes provide a dynamic fade margin that can provide the most appropriate link budget for the given propagation environment. This is far more efficient than having a fixed fade margin large enough to provide a high availability. It is an object of the present invention to provide an efficient means of transmitting data by pre-empting deep fades by modifying the transmissions using selected modes, variable rate codes at particular modes, power control and/or other modulation aspects.

In accordance with one aspect of the present invention, there is provided a method of generating a propagation attenuation time series including the steps of:

a) generating tropospheric scintillation data;

b) using the tropospheric scintillation data to generate a frequency characteristic; and

c) using the generated frequency characteristic to generate the propagation attenuation time series.

The method of the present invention predicts events that will cause deep fades in the communications link so that such fades can be compensated for to maintain a communication link.

In order to investigate the performance of communication networks involving FMTs, it is important to have accurate time series of link attenuation. It should also be possible to create spatially consistent time-coincident time series for multiple sites. Historical estimates of the meteorological environment from Numerical Weather Prediction (NWP) systems and archived radar data are used to create a set of physical models that are linked to attenuation. For simulation purposes it is possible to supplement the historical NWP data with archived radar data. In order to improve the effective data resolution, fractal downscaling techniques are employed to create a realistic stochastic small scale structure.

In addition to generating time series for link attenuation, it is also possible to use the generator framework to create forecasts of the propagation environment. These forecasts can be used for resource management techniques or to control adaptive TDMA techniques. However, in these cases, it is not suitable to use fractal downscaling techniques since the stochastic structures may not recreate the real structures.

For a better understanding of the present invention, reference will now be made, by way of example only, to the accompanying drawings in which:

Figure 1 illustrates an example unified model (UM) field for temperature at 1.5m at noon on 23 June 2003;

Figure 2 is a block diagram illustrating a time series generator in accordance with the present invention.;

Figure 3 illustrates attenuation time series for locations on the south coast of England for a 50 GHz link to geostationary link at 2 West on 22 June 2003 using the method of the present invention;

Figure 4 illustrations the effect of grid size on the final attenuation fields using a 30 GHz downlink at 100 West at 03:20 on 28 September 2004;

Figure 5 illustrates the domain areas for the grid sizes of Figure 4;

Figure 6 illustrates an example of the effects of spatial downscaling;

Figure 7 illustrates a rainfall time series for the City of Bath interpolated using two different schemes;

Figure 8 illustrates the cumulative density functions of a three-month time series for April to June 2003;

Figure 9 illustrates distributions of fade slope for different attenuation levels;

Figure 10 illustrates a comparison between 20.7 GHz beacon measurements and a time series generator in accordance with the present invention; and

Figure 11 illustrates one day of the comparison shown in Figure 10.

In accordance with the method of the present invention, numerical (NWP) systems are used to provide the majority of the prognostic meteorological estimates. These include three-dimensional fields of temperature, pressure and humidity. These model fields are typically provided upon vertical pressure levels such that the resolution increases closer to the ground. Other characteristics, such as surface fields of large-scale rainfall rate, convective rainfall rates and horizontal wind speeds, can be used to refine the method.

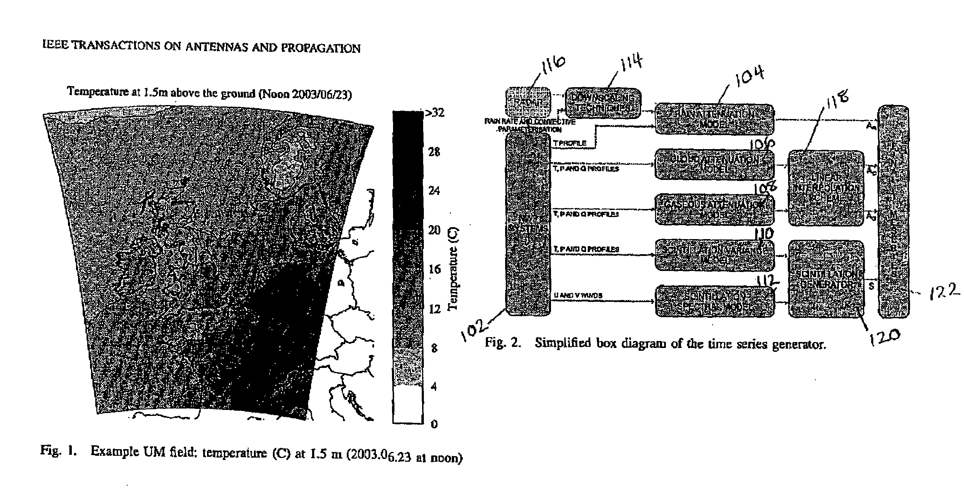

Two NWP systems, the UK Met Office's operational mesoscale Unified Model (UM) and the Pennsylvania State University/National Center for Atmospheric Research system (MM5) have been utilised. The operational UM provides data upon a rotated latitude and longitude co-ordinate system with a shifted north pole in order to obtain a fairly uniform horizontal resolution. The data is on a 146 x 181 grid with a nominal grid size of 0.11 degrees, which is approximately 12.3km. The spatial coverage of an example field shown in Figure 1.

The current implementation of the operational mesoscale UM is a hydrostatic model. Hydrostatic models assume that there is no vertical movement in the atmosphere, that is, the force exerted downward by gravity is exactly balanced by the force exerted by the pressure gradient. This assumption makes the UM inherently unable to model convective rain and clouds, at present there is only a parameterisation scheme which does not directly resolve convective events. However, it is envisaged various techniques will become available to assist with the modelling of convective events which will reduce the error bounds associated with the elemental module.

Convective rain and clouds have a large influence on Ka and V band communications. Convective clouds typically hold a large amount of liquid water and hence have a large specific attenuation. Convective rain is typically short lived and very intense but also leads to very deep link fades.

Whilst at present the UM domain covers the UK and parts of North West Europe, the 'European Model' from the UM covers all of Europe, the 'European Model' from the UM covers all of Europe, North Atlantic and parts of the Eastern Seaboard, Russia and North Africa with a 12km spatial resolution.

The MM5 can be run in a non-hydrostatic mode, making it possible to directly resolve convective events, but it should be noted that this is still dependent on the grid size being suitably small to resolve these events.

The MM5 was used with grid sizes varying from 50km to 2km and covering domains varying from the Continental US to 100km square grids over the UK. Outputs at intervals down to 4 minutes were achieved.

It is very important to understand the effect of the grid sizes especially upon rain accumulation fields. Since the rain accumulation that is recorded over a grid square, $R'$, is an estimate of the actual rain accumulation, R, obtained by integrating over that grid square of size s, in the time interval, $t_o$ that is

$$R'(x,y) = \int_x^{x+s} \int_y^{y+s} \int_t^{t+t_o} R(x,y,t)\,dx\,dy\,dt \qquad (1)$$

In physical terms, this has the effect of spatially and temporally averaging the rain across each grid square. Significant events occur in cells which are smaller than the grid size unless the dimensions of the grid are reduced considerably. It is also worth noting that as the grid size is reduce $R' \rightarrow R$, the NWP system provides more accurate forecasts. Some examples and a further discussion on the effects of grid scales are discussed below.

If historical time series are being created, it is possible to use archived radar data to improve the estimations of rainfall rate.

However, whilst using a forecasting paradigm radar, data can be assimilated into NWP models to increase the accuracy of the model analyses and hence the forecasts.

Referring now to Figure 2, a block diagram of a time series generator 100 is shown. The generator 100 comprises a NWP system 102 that provides NWP models for rain attenuation, cloud attenuation, gaseous attenuation, scintillation variance and scintillation spectra modules as Indicated by 104, 106, 108, 110 and 112 respectively. The rain attenuation module 104 receives a second (optional) input from a downscaling module 114 that utilises an output from the NWP system 102 and an output from a radar system 116.

The output from the cloud attenuation module 106 and the output from the gaseous attenuation module 108 form inputs for a linear interpolation 118. Similarly, the output from the scintillation variance module 100 and the output from the scintillation spectral module 112 form inputs for a scintillation generator 120.

The linear interpolation 118 provides two attenuation outputs that are input to a time series determinator 122. These two outputs correspond to the attenuation produced by cloud and gaseous matter respectively.

The scintillation generator 120 provides a single output for input to the time series determination 122. The single output corresponds to the scintillation effects.

The final input to the time series operator 122 is an attenuation output from the main attenuation module 104.

The generator 100 converts estimates of the meteorological environment to estimates of attenuation that are used to generate the time series.

Each module covers one source of attenuation at Ka and V band frequencies. The modules are independent and can be reconfigured or disabled as required.

A. Gaseous Attenuation

In the gaseous attenuation module 108, the attenuation due to gaseous absorption can be evaluated using a similar approach to ITU-R recommendation P.676-5 (a recognised standard). This evaluation creates vertical specific attenuation profiles by summing contributions from the individual resonance lines and line widths due to oxygen and water vapour at each pressure level. A slant path can then be Integrated through the specific attenuation profiles in order to achieve the gaseous matter path attenuation. It is to be noted that as the refractive index changes the slant path will suffer some ray bending that should be calculated to ensure that the correct line integral is evaluated.

The computation of the gaseous attenuation requires the vertical profiles of pressure, temperature and relative humidity, all of which are typical NWP prognostic variables.

The attenuation due to clouds is often ignored in many EHF and SHF propagation models as the attenuation caused by rain causes the deepest fades. However, by evaluating the ITU-R recommendations at 50GHz, it has been determined that the predicted attenuation for Bath, UK due to cloud is equal or greater than that predicted for rain for exceedences up to approximately 95%. This occurs since the probability of clouds occurring is typically greater than the probability of rain.

It will, however, be appreciated that in some other areas this is not the norm, and in order to have a time series generator that will be able to operate accurately in any area, attenuation due to cloud needs to be considered.

There are many forms of empirical cloud models available as described in "Cloud attenuation at millimetre wavelengths" by E Althshuler and R Marr, IEEE Trans Antennas Propagat, vol 37, no 11, pages 1473 to 1479, November 1989; or models that use simple 'average' cloud assumptions as described in "Cloud attenuation modelling for SHF and EHF applications" by A Dissanayake, J Allnutt and F Haidara, International Journal of Sat Commo, vol 19, pages 335 to 345, 2001.

However, since the NWP system provides vertical profiles of temperature, pressure and humidity, it is possible to use a physically-based process such as that proposed in "New predication method of cloud attenuation" by E Salonen and S Uppala in Electronic Letters, vol 27, no 12, pages 1106 to 1108, June 1991. The process described attempts to resolve individual cloud layers.

The first part of this process is the detection of cloud. The critical humidity is computed for each of the pressure levels which, when exceeded by the relative humidity, indicates that a cloud layer exists.

The critical humidity can be expressed as:

$$U_c = 1 - \sigma(1-\sigma)\left[1 + \sqrt{3}(\sigma - 0.5)\right] \qquad (2)$$

where $\sigma$ is the ratio of pressure at the considered point to the surface pressure.

Once the cloud layers have been detected, the vertical liquid water content (LWC) profile within the cloud, $w$, in $gm^{-3}$ can be computed as a function of temperature profile, $T$ in K and the height from the cloud base, $h_c$ using:

$$w = w_0 (1 + d.(T - 273.15))\left(\frac{h_c}{h_r}\right)^a p_w(T) \qquad (3)$$

The values recommended by Salonen and Uppala are as follows: $a = 1.4$ for the height dependent factor, $d = 0.041\ K^{-1}$ for the temperature dependent factor and $w_o = 0.14\ gm^{-3}$ is the reference LWC, with $h_r = 1500m$.

The liquid water fraction $p_w(t)$ can be assumed to follow a linear transition thus:

$$p_w(t) = \begin{cases} 1 & :273.15K < T \\ \dfrac{T - 253.15}{20} & :253.15K < T < 273.15K \\ 0 & :T < 253.15 \end{cases} \qquad (4)$$

In warm liquid clouds, scattering is much less significant than absorption and can be ignored. The Rayleigh absorption approximation can be applied to compute the specific attenuation profile. The Rayleigh absorption limit is valid for $lnlk_oa$, where $n$ is the refractive index of water, $k_o$ is the free space wave number and $a$ is the radius of the drop. Even at the upper limit of the EHF and SHF frequency bands, the value $k_oa$ only reaches values of the order of 0.25, and the Rayleigh approximation has been used up to frequencies of 100GHz. When the Rayleigh approximation is valid the absorption co-efficient is independent of cloud drop size distribution as described in "Microwave radiometric technique to retrieve vapour, liquid and ice, part 1 - development of a neural network-based inversion method" by L Li, J Viuekananda, C H Chan and L Tsang in IEEE Trans. Geosci Remote Sensing, vol 35, no 2, pages 224 to 236, March 1997. The slant path can then be integrated through the specific attenuation profile in the cloud attenuation module 106 to create the total slant path attenuation caused by clouds.

As stated above, rain attenuation is normally the source of the deepest fades at EHF and SHF frequencies. Although rain fading occurs less frequently than cloud-induced fading, it is more likely to lead to an outage even with an instantaneous FMT (that is, a technique not involving diversity). Moreover, even combined 'hybrid' FMTs are unlikely to be able to combat a fade in excess of 30dB.

In order to estimate the attenuation caused by rain estimates of rainfall rate (typically measured as $mmh^{-1}$) are required, these can be estimated from the accumulation such:

$$r'(x,y,t) = A\frac{d}{dt}R'(x,y,t) \qquad (5)$$

where A is a scale factor dependent upon the units of the accumulation and the temporal resolution, $t_o$. It is important to remember the effect spatial and temporal resolution have upon this measure because if the temporal resolution is too large this measure can quickly become unrepresentative of the meteorological environment.

In the rain attenuation module 104, estimates of rainfall rate are converted to a slant path attenuation using the model as described in "Method for predication of attenuation on earth-space links based on radar measurements of the physical structure of rainfall" by M J Leitao and P A Watson in Proc IEEE, vol 133, no 4, pages 429 to 441, July 1986. This model has several characteristics which make it suitable for the use in physically-based models. The first characteristic is that the model has been directly derived from radar data and, as such, there is no bias from empirical methods and that the conversions from point rainfall to slant path rainfall are accurate. The second characteristic that makes the model appropriate is the ability to evaluate the attenuation from convective or stratiform rain independently, making it possible to use the separate large scale and convective rain outputs from the NWP system 102. This helps to reduce effects caused by the variability in drop size distributions.

The value for the freezing height (and from this the rain height) is derived directly from the vertical profiles of temperature, giving an instantaneous height for the zero degree isotherm. This incorporates a variation within this parameter which is not modelled using the ITU-R yearly average as suggested in recommendation P.839-3, and this can have a significant effect upon the estimated rain attenuation.

The rain attenuation module 104 utilises the value for the freezing height to calculate the rain height.

Turning now to the scintillation variance module 110 and the scintillation spectral module 112, these modules determine values of tropospheric scintillation.

Tropospheric scintillation is the rapid fluctuation in signal levels caused by small scale variability in the transmission medium. At Ka and V band frequencies, the most significant scintillation is caused by turbulent irregularities in temperature, humidity and pressure within the troposphere which leads to small-scale variations in refractive index. Tropospheric scintillation is an essentially random phenomena which can not be predicted. Observations show that the distribution can be assumed to follow a Gaussian distribution. However, it has been demonstrated that for very large scintillation intensities the probability distribution function begin to show some asymmetry. This symmetry is described in "Asymmetric signal level distribution due to tropospheric scintillation" by M M J L van de Kamp in Electronic Letters, vol 34, no 11, pages 1145 to 1146, May 1988.

There have been many attempts to model the scintillation variance from meteorological characteristics as described in "A new prediction method for tropospheric scintillation on earth-spaoe paths" by Y Karasawa, M Yamada and J E Allnutt in IEEE Trans Antennas Propagat, vol 36, no 11, pages 1608 to 1614, November 1988; and in "Improved models for long-term predication of tropospheric scintillation on slant paths" by M M J L van de Kamp, J K Terwonen, E T Salonen and J P V P Baptista in IEEE Trans Antennas Propagat, vol 47, no 2, pages 249 to 260, February 1999. Since the NWP system 102 provides vertical profiles of temperature, pressure and humidity, it is possible to use physically-based models instead of empirical models. A model described in "Climatic radiowave propagation models" by M M J L van de Kamp, Ph.D dissertation, University of Eindhoven, 1999 has been shown to be accurate across a mixture of different climates. This makes it an appropriate model for the use in the scintillation variance module 110.

Using the calculated scintillation variance, the tropospheric scintillation can be determined by generating a zero mean, unit variance Gaussian distributed random variate and then modulating this with the calculated variance. This can then be filtered to provide the correct frequency characteristic. The roll-off of the fitter follows the Kolmogorov - 8/3 roll-off predicted by turbulence theory whilst the corner frequency can be calculated using the transverse wind velocity as described in "Temporal frequency spectra of multi-frequency waves in turbulent atmosphere" by A Ishimaru in IEEE Trans Antennas Propagat, vol 20, no 1, pages 10 to 19, January 1972; and in "Observed effects of cloud and wind on the intensity and spectrum of scintillation" by A Sauvaris, C N Kassianides and I E Otung, IEEE Trans Antennas Propagat, vol 52, no 6, pages 1492 to 1498, June 2004.

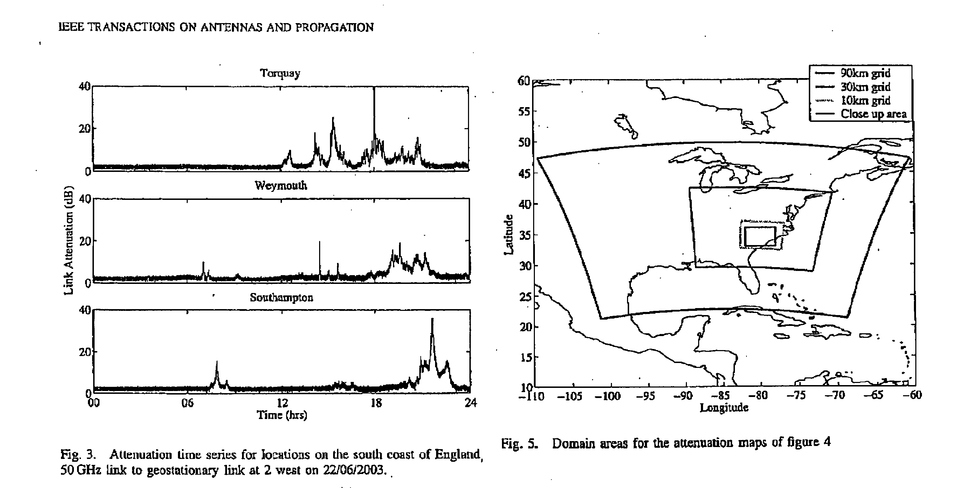

Examples of the time series that have been generated using the time series generator 100 in accordance with the present invention will now be described. Figure 3 illustrates time-coincident time series for three locations on the south coast of the UK (Torquay 3.4067°W, 50.3414°N), Weymouth (2.4254°W, 50-6189°N) and Southampton (1.4327°W, 50.8881°N). A 50GHz circularly polarised satellite downlink from a geostationary satellite at 2/W on 22 June 2003 was used and the time series were generated using historical UM data and archived NIMROD radar data.

The historical UM data was supplied by the British Atmospheric Data Centre and the Rutherford Appleton Laboratories.

From the generated time series, maps of instantaneous attenuation can be created. It is to be noted that the grid scale of the map has an effect on the attenuation information for the area covered.

As an example, a close up of a small area of a map is shown in Figure 4 at three different grid sizes, namely 90km, 30km and 10km. These maps were created using the MM5 model for the areas shown in Figure 5 over the continental US. The attenuation was calculated for 28 September 2004 03:20 (UT) for a 30GHz downlink from a geostationary satellite at 100W. As can be seen from Figure 4, the effect of reducing the grid scale from 90km to 10km causes more features become resolved and the attenuation forecast for the area is refined. The variations in rain accumulation (and to a lesser extent cloud liquid water) were averaged within the grid square and not resolved. For large grid sizes, this results in over or under estimation of the attenuation level.

Figure 5 illustrates the domain areas for the attenuation maps of Figure 4, the 90km grid being the longest area with 10km grid being the smallest area.

There are several improvements that can be made to the model when it is being used within a simulation environment. Downscaling techniques can be used to introduce a stochastic small scale structure, either in two-dimensional rain fields or one-dimensional rainfall rate time series. It is important to note that these techniques are not appropriate for use in forecasting mode, since the small scale structure is stochastic and whilst it displays the correct characteristics, it is one solution from a set of possible solutions for the small structure.

One set of techniques for adding this small scale structure include schemes that exploit the fractal nature of rainfall. An example of one such scheme is multifractal spatial downscaling and follows a procedure outlined in "Multiaffine random field model of rainfall" by M Menabde, A Seed, D Haruus and G Austin in Water Resour Red, vol 35, no 2, 1999. The procedure is based upon a multiplicative bounded-lognormal random cascade and has been shown to retain the correct power spectrum as well as retain the statistical moments of the rain field. Statistical moments of rain fields are described in "A comparison of stochastic models for spatial rainfall downscaling" by L Ferviarus, S Galberllani and N Rebora, Water Resour Red, vol 39, no 12, 2003.

On each iteration of the procedure, every original pixel is split into four pixels and each of the new pixels is multiplied by an independent realisation of a random variate. The distribution of this variate is a function of the generalised structure function and variance of the initial rain field.

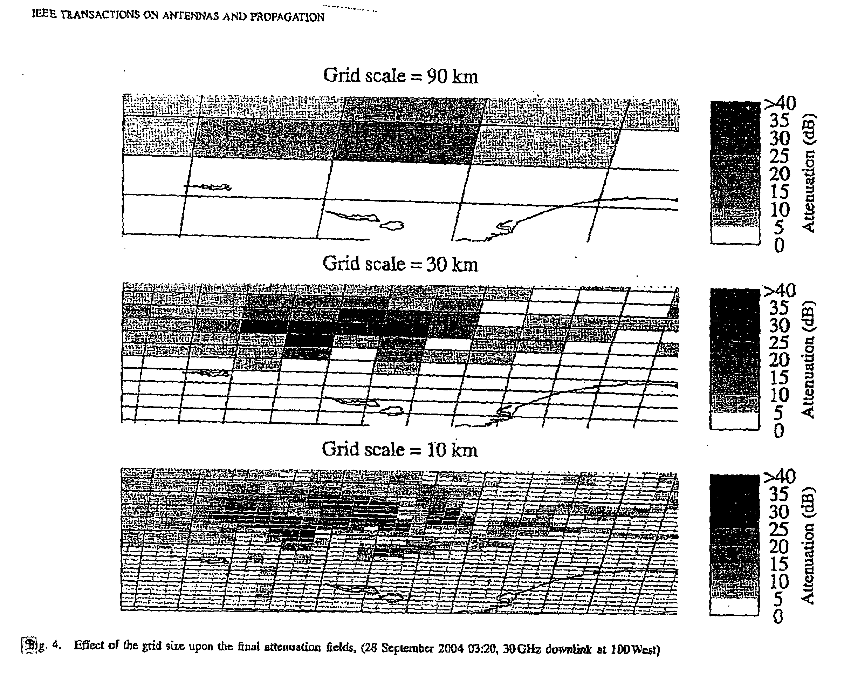

Examples of an original rain field and a downscaled version are shown in Figure 6, with a downscale factor of 4, i.e. one pixel (approximately 12km by 12km) on the original field covers sixteen on the new field (each pixel approximately 3km by 3km).

Another example is it can readily be appreciated from Figure 6 that high resolution downscaled rain field (Figure 6(b)) provides a clearer indication of the main field rate than the original low resolution UM rain rate field (Figure 6(a)). An alternative method is to apply Monofractal log-rainfall-rate time series interpolation. If single-site time series are required (that is, maintaining the correct spatial correlation is not important) then a simpler temporal interpolation scheme can be used. Whilst rain fields are shown to exhibit multifractal behaviour, there is significant evidence to suggest that 'log rainfall rate' time series exhibit monofractal scaling as the generalised fractal dimension is constant with increasing moment. This allows an efficient monofractal approach to be used. Such an approach is described in "Fractal interpolation of rain time-series" by K Paulson in J Geophys, Res-Atomos, vol 109, 2004.

A simple interpolation scheme, such as a linear Interpolation scheme introduces higher frequency components into the time series but does not add any significant power to these components. This means that the Komologorov spectrum is not maintained and results in significant effects upon the fade duration and fade slops metrics of the resulting propagation time series. In order to solve this problem a stochastic higher frequency component is introduced in a very controlled manner. This ensures the Komologorov spectrum and the ensemble mean and variance are conserved.

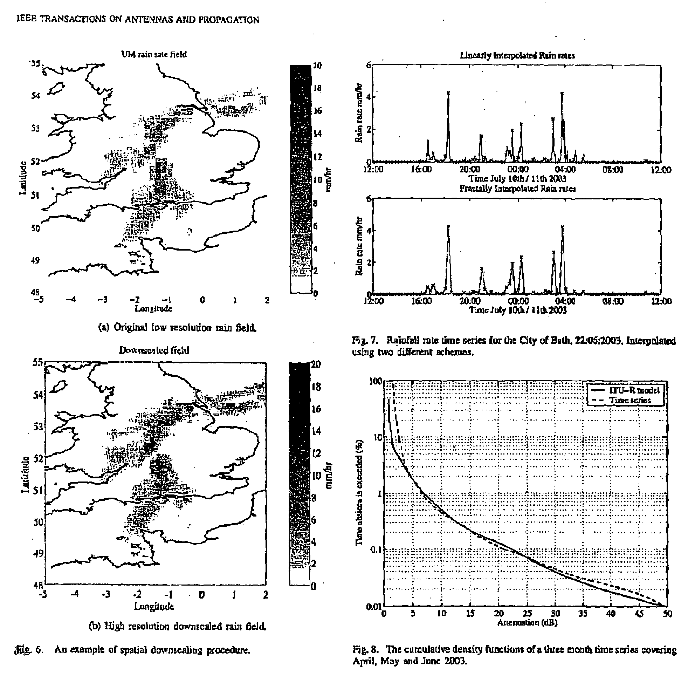

Two rainfall rate time series are included in Figure 7. The rainfall rate time series for the City of Bath on 22 June 2003 is interpolated using two different interpolation schemes and shows a comparison of a linear interpolated and a time series using monofractal interpolation.

For time series validation to be useful for network simulations, it is important that the time series exhibit the correct characteristics.

The first order characteristics of the time series are typically expressed as a cumulative density function (CDF) of a long length of time series. This can be compared to those suggested by the ITU-R recommendations such as P836-3, P676-5, P840-3 and P837-4.

Time series created for a 50GHz downlink from 2W to Bath, UK for a three month period of 2003 (April, May and June) is shown in Figure 8. In Figure 8, a plot of when the time abscissa is exceeded against attenuation is shown. This time series was based upon UM and NIMROD archived data. The cumulative density function was extracted and compared to the ITU-R recommendations, the time series being shown by a dotted line and the ITU-R model by a solid line.

As shown, the time series and the ITU-R recommendations compare well, as the ITU-R recommendations cover the CDF for the whole year and the time series is for a three month period only, some deviation is expected.

The second order characteristics (or the 'dynamics') of the time series represent how the propagation impairment varies with time. The observations of fade slope, as described in "Statistical analysis of rain fade slope" by M M J L van de Kamp, in IEEE Trans Antennas Propagat, vol 51, no 8, pages 1750 to 1759, August 2003, form a good comparison for the generated time series. These measurements are from beacons aboard the Olympus, Italsat F1 and ACTS satellites with various receivers over Europe and the continental US.

The generated time series were processed using the approach described in "Statistical analysis of rain fade slope" discussed above with the exception of one process. Since the measurement of fade slops only refers to the rate of change of the 'slow-moving' component of the time series, the beacon measurements must have the 'fast-moving' scintillation component filtered off. For the generated time series this is simplified since the scintillation generator can simply be disabled, leaving a time series purely created from the 'slow-moving' attenuation.

The fade slope $\zeta$ can be calculated using a simple finite difference approach:

$$\varsigma(i) = \frac{A(i+1) - A(i-1)}{2} \qquad (6)$$

where $\zeta$ is the fade slopes in dBs$^{-1}$, *A* is attenuation in dB and i is the sample number. The results as are presented as conditional distributions of $\zeta$ based upon a given attenuation.

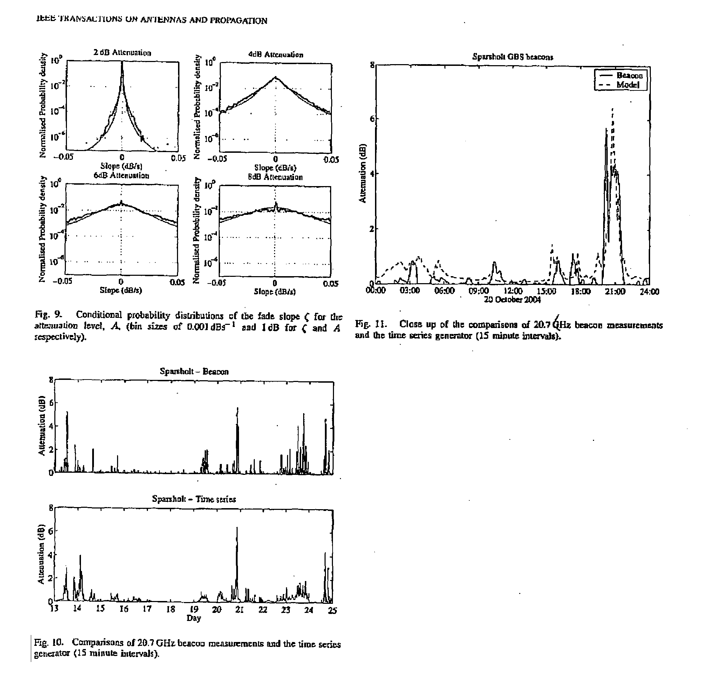

A comparison of four attenuation bins was carried out for attenuation values of 2dB, 4dB, 6dB and 8dB. The results are shown in Figure 9 as plots of normalised probability density against slope to provide conditional probability distributions of the fade slope $\zeta$ for the attenuation level A where the bin size is 0.001 dBs$^{-1}$ and the attenuation level is 1dB. The plots are shown as thick lines, the output from the time series, and plots are derived as described in "Statistical analysis of rain fade slope" discussed above, the theoretical model, are shown as thinner lines. In each attenuation bin, the theoretical model and the time series output match well, suggesting that the fade slope of the time series match 'real time series'.

Validation of the performance of the time series generator can be achieved using a comparison with measurements from beacons. The only current active Ka band beacon data over the UK, that is suitable for propagation research, is the 20.7GHz beacon from the Global Broadcast System (GBS) that is being collected by the Radiocommunications Research Unit at the Rutherford Appleton Labs. The GBS system Is aboard the US military satellite UFO-9 which is stationed at approximately 23°W on an orbit being approximately 3° of inclination, the effects of the inclined orbit are removed during a post processing stage. The relatively low frequency of this beacon is not ideal since it does not provide a large range of measurements to demonstrate the best ability of the time series generator.

The model was run with the UM and NIMROD systems and the output was compared to the receiver at Sparsholt in southern England. The comparison for a twelve day period in October 2004 is shown in Figure 10. The data is provided at a 15 minute resolution, but this time resolution is too coarse to resolve many events and shows evidence of spatial and temporal averaging. To minimise the effect of the temporal averaging the beacon data has been filtered with a 15 minute moving-average filter. Whilst this does not completely mitigate the effects, it is sufficient to allow a coarse comparison. A close up of one day is included in Figure 11.

In Figure 11, the comparison for 20 October 2004 is shown. The data from the beacon is shown as a solid line and the data from the time series generator model is shown as a dashed line.

There are several effects that may introduce errors in the output of the time series model that lead to the differences between the beacons measurements and the output of the model. The meteorological estimates from NWP systems suffer from spatial and temporal averaging. (In this case, the highest resolution information is at a temporal resolution of 15 minutes and a spatial grid squares of 5km). This results in the possibility of temporal shifting or fade depth errors when compared to the beacon measurements. The structure of rainfall and raindrops vary greatly from event to event which results in variations with the vertical profile of the attenuation and variations within the drop size distribution, whilst precautions have been taken to reduce these effects they cannot be completely eliminated and will appear as fade depth errors.

From the comparison shown in Figure 11, several effects are evident. The main event at 21:00 is modelled well, although the small scale structure is lost due to the inability to resolve very small scale rain structure and drop size variations. In the early afternoon, between 15:00 and 18:00, we identify two rain events which are also evident in the beacon measurements. However, these are shifted temporally - most likely due to the spatio-temporal resolution of the datasets.

Moreover, the attenuation event between 09:00 and 12:00 is very poorly modelled in both depth and time. This rain event has been poorly modelled by the NWP system and poorly resolved by the radar system. This is also most likely a resolution error or a 'freak' weather event, i.e. heavily convective, or with supercooled liquid above the melting layers.

Despite these errors it is worth noting that the ability of the model to predict large fades is good, within an operational forecasting system. Since tropospheric scintillation is unpredictable, there is still a requirement for a 'scintillation margin' with the link budget, and hence the ability to resolve small scale events (of the order of 1 dB) is less important since the events will not be detectable within the scintillation.

The present invention of a physically-based time series generator is capable of generating time-coincident multiple-site historical attenuation time series for simulation. Applications of these time series include investigations into the effects of site and time diversity. Of particular interest is the performance of entire networks under fading conditions when complex FMTs and resource allocation algorithms are operating.

The first order characteristics of the time series agree with cumulative distributions of attenuation from ITU-R recommendations with errors of less than 4% and 6% at availabilities of 99% and 99.9% respectively. The distributions of fade slopes agree well with those derived from beacon measurements. The percentage error for a 1% probable fade slope is less than 4% for attenuation bins up to 8 dB. In the time series that were analysed there were not enough events within the higher attenuation bins to produce statistically valid fade slope distributions for attenuation bins in excess of 8 dB.

The use of a scintillation model enhances the derived time series by taking cognisance of the properties of the medium. The scintillation model emulates the stochastic process observed so the wave propagates from the satellite to a ground terminal. The examples used apply a zero mean with a weighted variance, but it should be noted that it is important to maintain the Komologorov spectrum.

The present invention forecasts the sites and the time that fading will be present on the link and the depth of fade that will be observed. This forecast allows a central controller to allocate resources to mitigate the fades appropriately.
Fade mitigation techniques fall into three general categories, namely, power control, adaptive waveforms and diversity. The first two categories allow the controller to retain the link to the site but reduces the data throughout. The third category, diversity in time on location, demands control from a coordinating body. The threshold of moving to a network to exploit diversity is currently 20dBs of fade - equivalent to the combined mitigation techniques available.
A distinguishing feature of the present invention is that it can also be used to generate propagation forecasts. Comparisons between the model and beacon measurements have been shown. The model is able to forecast the occurrence of fade events well. The model is also capable of forecasting the fade depth, within the restrictions of the NWP system. Work ongoing involves the integration of an experimental version of the time series generator within the MM5 NWP system. This is capable of providing real-time forecasts for point-to-point terrestrial paths and slant path links working in excess of 20GHz.

**Claims**

1.    A method of generating a propagation attenuation time series including the steps of:

   a) generating tropospheric scintillation data;
   b) using the tropospheric scintillation data to generate a frequency characteristic; and
   c) using the generated frequency characteristic to generate the propagation attenuation time series.

2.    A method according to claim 1, wherein step a) includes the further steps of:

   i) deriving scintillation variance data; and
   ii) scintillation spectral data from estimates of the meteorological environment.

3.    A method according to claim 2, wherein the derived scintillation variance data is used to modulate a zero mean, unit variance Gaussian distributed random variate.

4.    A method according to any one of the preceding claims, further including the step of:

   d) generating rain attenuation data from estimates of the meteorological environment.

5.    A method according to claim 4, wherein step d) includes converting estimates of rainfall rate into a slant path attenuation.

6.    A method according to claim 4 or 5, wherein step d) further includes utilising radar data in addition to said estimates.

7.    A method according to any one of the preceding claims, further including the step of:

   e) generating cloud attenuation data from estimates of the meteorological environment.

8.    A method according to claim 7, wherein step e) includes the steps of:

   iii) detecting the presence of cloud; and
   iv) determining the liquid water content within the cloud as a function of temperature profile and height from the cloud base.

9.    A method according to any one of the preceding claims, further including the step of:

   f) operating gaseous attenuation data from estimates of the meteorological environment.

10.   A method of according to claim 9, wherein step f) includes the steps of:

   v) creating vertical specific attenuation profiles by summing contributions from individual resonance lines and line widths; and
   vi) integrating the created vertical specific attenuation profiles to generate the gaseous attenuation data.

Temperature at 1.5m above the ground (Noon 2003/06/23)

Fig. 1.   Example UM field: temperature (C) at 1.5 m (2003.06.23 at noon)

Fig. 2.   Simplified box diagram of the time series generator.

EP 1 763 154 A1

Fig. 3. Attenuation time series for locations on the south coast of England, 50 GHz link to geostationary link at 2 west on 22/06/2003.

Fig. 5. Domain areas for the attenuation maps of figure 4

EP 1 763 154 A1

Grid scale = 90 km

Grid scale = 30 km

Grid scale = 10 km

Fig. 4. Effect of the grid size upon the final attenuation fields. (28 September 2004 03:20, 30 GHz downlink at 100 West)

EP 1 763 154 A1

UM rain rate field

(a) Original low resolution rain field.

Downscaled field

(b) High resolution downscaled rain field.

Fig. 6. An example of spatial downscaling procedure.

Linearly Interpolated Rain rates

Time July 10th / 11th 2003
Fractally Interpolated Rain rates

Time July 10th / 11th 2003

Fig. 7. Rainfall rate time series for the City of Bath, 22:06:2003. Interpolated using two different schemes.

ITU–R model
Time series

Fig. 8. The cumulative density functions of a three month time series covering April, May and June 2003.

Fig. 9. Conditional probability distributions of the fade slope $\zeta$ for the attenuation level, $A$, (bin sizes of 0.001 dBs$^{-1}$ and 1 dB for $\zeta$ and $A$ respectively).

Fig. 11. Close up of the comparisons of 20.7 GHz beacon measurements and the time series generator (15 minute intervals).

Fig. 10. Comparisons of 20.7 GHz beacon measurements and the time series generator (15 minute intervals).

**European Patent Office**

## EUROPEAN SEARCH REPORT

Application Number

EP 05 25 5631

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WATSON R J, HODGES D D: "A real-time SHF propagation forecasting system using numerical weather predictions and radar measurements" ANTENNAS AND PROPAGATION SOCIETY INTERNATIONAL SYMPOSIUM, 2005 IEEE, vol. 4A, 3 July 2005 (2005-07-03), pages 47-50, XP002362903 | 1-9 | H04B7/185 |
| Y | * the whole document * | 10 | |
| Y,D | "Attenuation by atmospheric gases" RECOMMENDATION ITU-R P.676-5, February 2001 (2001-02), pages 1-21, XP002363482 Page 1, first paragraph of Chapter "Specific attenuation" * page 7, last paragraph * * page 9, paragraph 1 * | 10 | |
| Y | HODGES D ET AL: "Generation of attenuation time-series for EHF SATCOM simulation" 2003 IEEE MILITARY COMMUNICATIONS CONFERENCE. MILCOM 2003. BOSTON, MA, OCT. 13 - 16, 2003, IEEE MILITARY COMMUNICATIONS CONFERENCE, NEW YORK, NY : IEEE, US, vol. VOL. 2 OF 2, 13 October 2003 (2003-10-13), pages 505-510, XP010698358 ISBN: 0-7803-8140-8 * the whole document * | 1-10 | **TECHNICAL FIELDS SEARCHED (IPC)** H04B |

-/--

The present search report has been drawn up for all claims

| Place of search | Date of completion of the search | Examiner |
|---|---|---|
| Munich | 19 January 2006 | Fribert, J |

European Patent
Office

# EUROPEAN SEARCH REPORT

Application Number

EP 05 25 5631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | OTUNG I E: "Comparative evaluation of rain and scintillation fading on low-availability Ka-/EHF bands VSAT satellite systems" AFRICON, 1996., IEEE AFRICON 4TH STELLENBOSCH, SOUTH AFRICA 24-27 SEPT. 1996, NEW YORK, NY, USA,IEEE, US, vol. 1, 24 September 1996 (1996-09-24), pages 517-522, XP010207982 ISBN: 0-7803-3019-6 * the whole document * ----- | 1,4-10 | |
| Y | EP 0 837 569 A (GLOBALSTAR L.P) 22 April 1998 (1998-04-22) * abstract * * column 4, line 30 - line 44 * * column 6, line 43 - line 55 * * column 10, line 52 - column 11, line 3 * * column 14, line 46 - column 15, line 21 * * claims 1,2 * ----- | 1,4,6-10 | |
| Y | VAN DE KAMP M M J L ET AL: "Tropospheric scintillation measurements and modelling in Finland" ANTENNAS AND PROPAGATION, TENTH INTERNATIONAL CONFERENCE ON (CONF. PUBL. NO. 436) EDINBURGH, UK 14-17 APRIL 1997, LONDON, UK,IEE, UK, vol. 2, 14 April 1997 (1997-04-14), pages 141-144, XP006507637 ISBN: 0-85296-686-5 * page 141, left-hand column, paragraph 2 * * page 142, left-hand column, last paragraph - page 143, paragraph 2 * ----- | 2,3 | TECHNICAL FIELDS SEARCHED (IPC) |

The present search report has been drawn up for all claims

| Place of search | Date of completion of the search | Examiner |
|---|---|---|
| Munich | 19 January 2006 | Fribert, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 05 25 5631

This annex lists the patent family members relating to the patent documents cited in  the above-mentioned European search report.
The members are as contained in the European Patent Office EDP file on
The European Patent Office is in no way liable for these particulars which are merely  given for the purpose of information.

19-01-2006

| Patent document cited in search report | | Publication date | Patent family member(s) | | Publication date |
|---|---|---|---|---|---|
| EP  0837569 | A | 22-04-1998 | AU | 4895197  A | 15-05-1998 |
| | | | CA | 2218668  A1 | 21-04-1998 |
| | | | ID | 18596  A | 23-04-1998 |
| | | | JP | 10190550  A | 21-07-1998 |
| | | | WO | 9818214  A1 | 30-04-1998 |
| | | | US | 6587687  B1 | 01-07-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R POLONIO ; C RIVA.** ITALSAT propagation experience at 18.7, 39.6 and 49.5 Hz at Spino D'Adda three years of CPA statistics. *IEEE Trans Antennas Propagat,* May 1998, vol. 46 (5), 631-635
- **G GREMONT ; M FILIP ; P GALLOIS ; S BATE.** Comparative Analysis and performance of two predictive fade detection schemes for Ka band fade countermeasures. *IEEE J Select Areas Commun,* February 1999, vol. 17 (2), 180-192
- **M J WILLIS.** Fade countermeasures applied to transmissions at 20/30 GHz. *Electronics and Communication Engineering Journal,* April 1991, 88-96
- **R J WATSON ; D HODGES.** The use of short term attenuation precasts for resource management. *Roc. 10th Ka and broadband Communications Conference,* October 2004
- **E ALTHSHULER ; R MARR.** Cloud attenuation at millimetre wavelengths. *IEEE Trans Antennas Propagat,* November 1989, vol. 37 (11), 1473-1479
- **A DISSANAYAKE ; J ALLNUTT ; F HAIDARA.** Cloud attenuation modelling for SHF and EHF applications. *International Journal of Sat Commo,* 2001, vol. 19, 335-345
- **E SALONEN ; S UPPALA.** New predication method of cloud attenuation. *Electronic Letters,* June 1991, vol. 27 (12), 1106-1108
- **L LI ; J VIUEKANANDA ; C H CHAN ; L TSANG.** Microwave radiometric technique to retrieve vapour, liquid and ice, part 1 - development of a neural network-based inversion method. *IEEE Trans. Geosci Remote Sensing,* March 1997, vol. 35 (2), 224-236
- **M J LEITAO ; P A WATSON.** Method for predication of attenuation on earth-space links based on radar measurements of the physical structure of rainfall. *Proc IEEE,* July 1986, vol. 133 (4), 429-441
- **M M J L VAN DE KAMP.** Asymmetric signal level distribution due to tropospheric scintillation. *Electronic Letters,* May 1988, vol. 34 (11), 1145-1146
- **Y KARASAWA ; M YAMADA ; J E ALLNUTT.** A new prediction method for tropospheric scintillation on earth-spaoe paths. *IEEE Trans Antennas Propagat,* November 1988, vol. 36 (11), 1608-1614
- **M M J L VAN DE KAMP ; J K TERWONEN ; E T SALONEN ; J P V P BAPTISTA.** Improved models for long-term predication of tropospheric scintillation on slant paths. *IEEE Trans Antennas Propagat,* February 1999, vol. 47 (2), 249-260
- **M M J L VAN DE KAMP.** Climatic radiowave propagation models. University of Eindhoven, 1999
- **A ISHIMARU.** Temporal frequency spectra of multi-frequency waves in turbulent atmosphere. *IEEE Trans Antennas Propagat,* January 1972, vol. 20 (1), 10-19
- **A SAUVARIS ; C N KASSIANIDES ; I E OTUNG.** Observed effects of cloud and wind on the intensity and spectrum of scintillation. *IEEE Trans Antennas Propagat,* June 2004, vol. 52 (6), 1492-1498
- **M MENABDE ; A SEED ; D HARUUS ; G AUSTIN.** Multiaffine random field model of rainfall. *Water Resour Red,* 1999, vol. 35 (2
- **L FERVIARUS ; S GALBERLLANI ; N REBORA.** A comparison of stochastic models for spatial rainfall downscaling. *Water Resour Red,* 2003, vol. 39 (12
- **K PAULSON.** Fractal interpolation of rain time-series. *J Geophys, Res-Atomos,* 2004, vol. 109
- **M M J L VAN DE KAMP.** Statistical analysis of rain fade slope. *IEEE Trans Antennas Propagat,* August 2003, vol. 51 (8), 1750-1759